# EUROPEAN PATENT SPECIFICATION

(11) **EP 4 267 492 B1**
(45) Date of publication and mention of the grant of the patent: **04.11.2026**
(21) Application number: 21839195.1
(22) Date of filing: 16.12.2021
(51) Int. Cl.: B65D 90/00, H04Q 9/00

(54) **DETECTOR TWISTLOCK UNIT FOR CONTAINERS WITH SENSORS AND SYSTEM USING SUCH DETECTOR TWISTLOCK UNITS**
DETEKTORDREHVERSCHLUSSEINHEIT FÜR BEHÄLTER MIT SENSOREN UND SYSTEM MIT SOLCHEN DETEKTORDREHVERSCHLUSSEINHEITEN
UNITÉ DE VERROU TOURNANT À DÉTECTEUR POUR CONTENEURS AVEC CAPTEURS ET SYSTÈME UTILISANT DE TELLES UNITÉS DE VERROU TOURNANT À DÉTECTEUR

(30) Priority: 23.12.2020 SE 2051556
(43) Date of publication of application: 01.11.2023
(73) Proprietor: LOX Container Technology AB, 11541 Stockholm (SE)
(72) Inventor: CARLMEISTER, Magnus, 115 20 Stockholm (SE)
(74) Representative: Bjerkén Hynell KB
(86) International application number: PCT/EP2021/086352
(87) International publication number: WO 2022/136134

(56) References cited:
- WO-A1-2018/172518
- WO-A2-2016/126163
- US-A1- 2003 149 526

## Description

### TECHNICAL FIELD

The present disclosure relates generally to detector twistlock unit, for standardized containers, with sensors for detecting potentially hazardous conditions and/or hazardous conditions, a hazardous condition warning and/or alarm system using such detector twistlock units and a method for operating such a system.

### BACKGROUND

When transporting goods over long distances on seas, rail and road, standardized containers are typically used. These containers may be referred to as intermodal containers, shipping containers and/ or ISO containers. ISO is an abbreviation for International Organisation for Standardisation, which has determined a globally accepted standardised dimensions of the shipping containers of the discussed type.

These standardized shipping containers can be covered by the standard ISO 1496-1:2013. The containers are made of steel. They can be loaded and unloaded, stored as stacks in a container park, transported efficiently over long distances, and transferred from one mode of transport to another, e.g., container ships, rail transport flatcars, and semi-trailer trucks, without being opened. All containers are numbered with a unique identification number and are usually tracked using computerised systems which store the identity of each container and its current location (and usually other information such as weight, contents, risk group, destination) in a container tracking database. Stacking and anchoring the containers in a safe way, also during shipping in rough seas, is possible thanks to standardised corner fittings at each corner of the containers. Thus, standardized containers have eight standardized corner fittings - four on the upper corners of the container and fours on the lower corners of the container - which can be used for lifting. The female part of the connector is the 7×7×4 1/2 in (180×180×110 mm) corner fitting, which is fitted to the container itself, and has no moving parts, only an oval hole in the bottom. The hole is an oval 4.9 in (124.5 mm) on the long axis with two flat sides 2.5 in (63.5 mm) apart. The male component is the twistlock, which is fitted to cranes, vehicle transport bases and the like. This can be inserted through the hole (it is roughly 4.1 in or 104.1 mm long and 2.2 in or 55.9 mm wide), and then the top portion (normally pointed to make insertion easier) is rotated 90° so that it cannot be withdrawn. The maximum size and position of the holes in the connector is defined in international standard ISO 1161:1984. The tensile strength of a twistlock is rated at either 20 or 25 tonnes.

A container corner lock, generically called a "twistlock", may be inserted and fixed into the respective lower recess of each of the four corner fittings under a container when it has been lifted from the ground, e.g., on a quay. The container may then be lifted with a crane, spreader unit or forklift truck or the like and placed on top of another, lower container on the ship. Each twistlock in the lower corner fittings of the upper container is thereby introduced into the upper recess of the respective standardised corner fitting on the roof of the lower container. Subsequently, an operator has to lock the container twistlocks to the lower container by moving a locking bar. This may require climbing up a lashing bridge, using a long stick or similar instrument to reach the locking bars or even traveling in a cage attached to the spreader unit to reach the upper container tiers. Remotely controllable motorised twistlocks can also be used which allow the operator to remain on the ground while locking the locks. Thus, removable twistlocks can also be used to lock together a container stacked on top of another container. Stacking of containers takes place as in the form of stacks of containers placed in container parks in storage yards on land, for example dockyards and railway yards, and at sea onboard ships.

In this patent application, the word "container" will mean a standardised container according to ISO standards, "corner fitting" will mean a corner fitting according to the standard applied to such a container and "twistlock" means a twistlock adapted to be used with the corner fittings of such a container.

The stacking of containers is used on board ships in order to maximize the load-carrying capacity of the vessel. The largest container ships can carry over a container park of 20,000 containers or more and the height of the stacks in the container park can be 8 or more containers high. The lower tiers of containers, typically the first four or five tiers, are joined together by twistlocks and can be stabilized by lashings which connect the containers to the ship's superstructure. However, the upper levels of containers are often only held together by the twistlocks between the corner fittings of the containers, with no additional connection or stabilizing means. The stacks of containers are placed closely together in narrowly separated rows on the deck of the shipping vessel. Each container has a unique serial number and during loading of the ship the position of each uniquely identifiable container in the onboard container park is stored in an electronic database accessible to operators, This can be achieved by using individually identifiable twistlocks associated with each container as described in WO2018172518. WO2016126163 relates to a container foundation with a twistlock with a sensor which measures the weight loaded on the twistlock. The twistlock can transmit a signal related to the weight, thereby measuring the weight of a stack of containers on the foundation.

These stacks often reach up to the level of the bridge of the vessel which means that it is impossible for the bridge crew to closely observe all the containers because their view of the more distant containers is obstructed by the containers closest to the bridge. Stacks on land are often not as high but may be spread over large areas which are difficult to monitor by eye.

There are two major types of hazards which can cause considerable damage to containers and/or the vessel transporting them - fire and toppling of the stacks. Fire can be cause by combustion of the contents of a container and toppling can be caused by the motion of the ship in abnormal sea or weather conditions or can be due to failure of lashing or incorrect application of lashings. Fire and toppling of stacks can lead to lost containers and/or damage to, or loss of, the vessel. Other types of hazards include tampering with the container. Tampering can be in the form of theft when the contents of the container are stolen, vandalization or sabotage when the contents of the container or the container itself are deliberately damaged and smuggling or misdeclaration when the legal contents of a container are exchanged for, or supplemented by, illegal items.

Current methods for observing such hazards are unreliable as they depend on a human being able to see the hazard and such problems often are detected only after a fire has spread and has become difficult to control or after a stack has toppled or when a container is inspected by an end user or a customs authority or the like.

### PROBLEMS WITH THE PRIOR ART

Early detection of a fire or toppling risk is important but there are no automated systems available for reliably detecting a fire in a container in a stack of containers in a container park before the fire has spread to other containers or for detecting abnormal movement of a stack of containers. There are no automated systems for detecting if a container has been tampered with after it has been loaded into a stack.

There is thus a need for a monitoring system for monitoring containers to enable early detection of a hazardous or potentially hazardous situation.

### SUMMARY

The above-described problem is addressed by the claimed system for detecting a hazardous condition affecting a container and detector twistlock units for use in such a system.

The system comprises a plurality of detector twistlock units adapted to detect a parameter which has passed a first threshold which could indicate the potential presence of a hazardous condition for example, it the parameter is temperature, then the first threshold could be for example, 40°C. Each detector twistlock unit is adapted to send a wireless warning message reporting that the detected parameter has passed the first threshold to a security control unit provided with software for using the warning message to determine if a hazardous condition is present or imminent. Such detector twistlock units may also be provided with visual and/or audible warning systems such as different coloured lights and/or flashing lights and/or alarm sirens or bells or the like to enable identification and localization of detector twistlock units without the use of any electronic devices. This provides additionally security in the event of a system failure, wireless communication failure or a power supply failure on the vessel.

The use of such detector twistlock units with a first threshold enables the system to provide local monitoring of the conditions in the vicinity of each of the detector twistlock units and early detection of a potentially hazardous condition within detection range of each of the detector twistlock units. The software provides means to evaluate messages received from one or more detector twistlock units in order to determine the presence of a false alarms and potentially hazardous conditions which may require further action.

The detector twistlock units in said system are also adapted to detect when the parameter has passed a second threshold which represents a greater hazard than the first threshold and which could indicate the actual presence of a hazardous condition, for example, it the parameter is temperature, and the first threshold was, as described above, 40 °C then the second threshold could be for example, 70 °C. Such detector twistlock units are adapted to send a wireless alarm message reporting that the detected parameter has passed the second threshold to a security control unit provided with software for using the alarm message to determine if a hazardous condition is present. The use of such detector twistlock units with a second threshold enables the system to provide local monitoring of the conditions in the vicinity of the detector twistlock units and early detection of a hazardous condition within the detection range of the detector twistlock units. The software provides means to evaluate messages received from one or more detector twistlock units in order to determine the presence of a false alarms and actual hazardous conditions which require further action.

Detector twistlock units may be provided with means for detecting tampering with a container. Such tampering detecting means could comprise one or more load sensors which can be connected to software which commands the detector twistlock units to record the complete weight of the containers above the detector twistlock units and can produce a signal when the weight changes above a user defined threshold and/or record when the weight changed. A warning message is transmitted when a first threshold is passed, and an alarm message sent when a send threshold is passed. As only containers below the container(s) being tampered with will detect a change in weight, it is easy to determine which container(s) in a stack has/have been tampered with by comparing the changes in weight detected by all the detector twistlock units in that stack. The weights detected by the detector twistlock units can be recorded over time and only changes of weight and the date and time they occurred need to be stored in a memory in order to save memory space. This weight can be analysed to determine when tampering with the container(s) occurred and this can be used by the shipping carrier and customs authorities to detect suspicious cargos and insurance companies to determine when damage occurred and who bears responsibility for it. Even accidental damage caused by impacts may be detected by tampering detecting means.

Some hazards may generate noises, for example, an impact caused by a container being dropped onto another container or hitting an obstacle during loading and unloading may generated a single, powerful spike in sound, while loose lashings may allow containers to move relative to each other causing rhythmic squeaking or banging noises. Equipping a detector twistlock unit with a microphone would allow these noises to be detected and a warning message to be transmitted when a first sound threshold is reached and/or an alarm message to be sent when a second threshold is passed. The time and amplitude of the sounds generating the warning and/or alarm signals can be recorded in memory. Optionally, information from any accelerometers may be stored at the same time to aid in the analysis of impacts on the containers.

As there is only limited space in a detector twistlock for a power supply, it would be useful to provide the detector twistlock units of the invention with energy harvesting means which can stored harvested energy in an energy storage device such as a rechargeable battery or capacitor. Any suitable energy harvesting means or combinations of energy harvesting means may be used, for example those using as pressure, vibration, wind, thermal gradients, and solar energy.

In the system according to the invention, the system comprises at least one wireless transceiver for communicating with detector twistlock units, at least two detector twistlock units and a control unit comprising software for:
receiving a warning message from a detector twistlock unit,
identifying the detector twistlock unit transmitting said warning message,
determining the position of said detector twistlock unit in said stack,
sending a wake-up signal to one or more other sleeping detector twistlock units in said stack so that they become awake detector twistlock units and they activate their sensors and transmit a status message,
receiving status messages from awake detector twistlock units in said stack, and determining that a hazardous condition is present if one or more additional warning message and/or alarm message is received from one or more awake detector twistlock units.

This provides an alarm system with the capability to identify warning conditions and to check for false alarms.

In the system according to the invention, the system comprises at least one wireless transceiver for communicating with detector twistlock units, at least two detector twistlock units and a control unit comprising software for:
receiving an alarm message from a detector twistlock unit,
identifying the detector twistlock unit transmitting said alarm message,
determining the position of said detector twistlock unit in said container park,
sending a wake-up signal to one or more other sleeping detector twistlock units in said container park so that they become awake detector twistlock units and they activate their sensors and transmit a status message,
requesting a status message from awake detector twistlock units in said container park,
receiving status messages from awake detector twistlock units in said container park, and
determining that a hazardous condition is present if one or more warning message or additional alarm message is received from one or more awake detector twistlock units.

This provides an alarm system with the capability to identify alarm conditions and to check for false alarms.

In all embodiments of the invention the system can optionally operate a drone or robot to approach the area of the container park where a hazardous condition has been detected or activate a camera with a view of the area of the container park where a hazardous condition has been detected in order to optically verify the hazardous condition.

In all embodiments of the invention the system can transmit warning messages, respectively alarm messages, to other units.

The above described problem is further addressed by the claimed detector twistlock unit for detecting a hazardous condition which comprises a processing unit connected to a transceiver and further comprises one or more hazard-detecting sensors (called "sensors" in the following for brevity) configured to detect a status relating to temperature (e.g. using a thermocouple or temperature dependent resistance device, etc) and/or smoke (e.g. particle detector), and/or fire (e.g. an IR detector) outside the detector twistlock, and /or the proximity to an external object and/or weight/load sensor to detect changes in the weight in a stack and/or sound detectors to detect noises in the vicinity of a detector twistlock unit and/or comprises one or more detector twistlock position-related sensors such as an accelerometer and/or a GPS receiver-based sensor, and/or an inclinometer or the like, each sensor being configured to generate a parameter-related status message which can be sent to said processing unit and can be broadcast via said transceiver. Status messages can be "nominal" when the value of a detected parameter is below a threshold values, "warning" when the value of the detected parameter is outside a first threshold and "alarm" when the value of a detected parameter is outside a higher threshold. Additional intermediate thresholds can be used to generate increasingly serious warning messages e.g., a first threshold could generate a "level 1" warning, a second, higher, threshold a "level 2" warning, a third, higher, threshold a level 3 warning and so on. Such warning levels could be identified by different coloured lights and/or different flashing intensities or frequencies of lights arranged on a detector twistlock unit and/or by different warning sounds or messages from the audible warning device on a detector twistlock unit. The time taken between the parameter moving from one threshold to the next can be used to provide information which can be used to calculate the rate of increase or decrease in the parameter. Optionally, the exact value of a signal generated by a sensor may also be included in a status message to allow comparisons to be made between the conditions in the vicinities of different detector twistlocks. The exact value of, for example, the temperature transmitted by a detector twistlock unit may be used in the case of a fire to determine how quickly a fire is spreading and, once firefighting has been initiated, it may be used to control the firefighting. If the temperature detected by a first detector twistlock unit continues to increase while the temperature detected by a second detector twistlock unit decreases, then this information could be used to direct the firefighting efforts towards the vicinity of the first detector twistlock unit. Smoke detector sensors may have an active area oriented away from the detector twistlock so as to detect smoke between stacks in the container park. Heat detectors may comprise a thermocouple or the like positioned close to, or in, a portion of the detector twistlock intended to be inserted into a corner fitting of a container in order to monitor the temperature of the container to which the corner fitting is attached in order to detect abnormally hot containers.

Such detector twistlock units can be easily attached and removed from a container and can be used to provide messages related to a detected potentially hazardous condition and/or an actual hazardous condition and which messages additionally identify at least one of the container or containers to which the detector twistlock units are attached.

The scope of the invention is defined by the appended claims. A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly. Objects and features of the present invention may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

### BRIEF DESCRIPTION OF THE DRAWINGS

Figure 1 is a schematic conceptual overview of a hazardous condition warning system in accordance with one embodiment of the present invention.
Figure 2 schematically illustrates a container-carrying vessel comprising a hazardous condition warning system in accordance with one embodiment of the present invention.
Figures 3a and 3b are schematic perspective views of an embodiment of a detector twistlock unit for use in a hazardous condition warning system in accordance with the present invention.
Figure 4 schematically illustrates the steps in a method for providing a warning of potentially hazardous condition.
Figure 5 schematically illustrates the steps in a method for providing an alarm that there is a hazardous condition.
Figures 6a and 6b are schematic perspective views of an embodiment of a detector twistlock unit comprising a detachable sensor body for use in a hazardous condition warning system in accordance with the present invention.

Embodiments of the present disclosure and their advantages are best understood by referring to the detailed description that follows. It should be appreciated that like reference numerals are used to identify like elements illustrated in one or more of the figures.

### DETAILED DESCRIPTION

The present disclosure relates generally to systems and methods for warning of a hazardous condition in one or more stacks of standardized containers and detector twistlock units adapted for use in such systems and methods.

Embodiments of the disclosed solution are presented in more detail in connection with the figures.

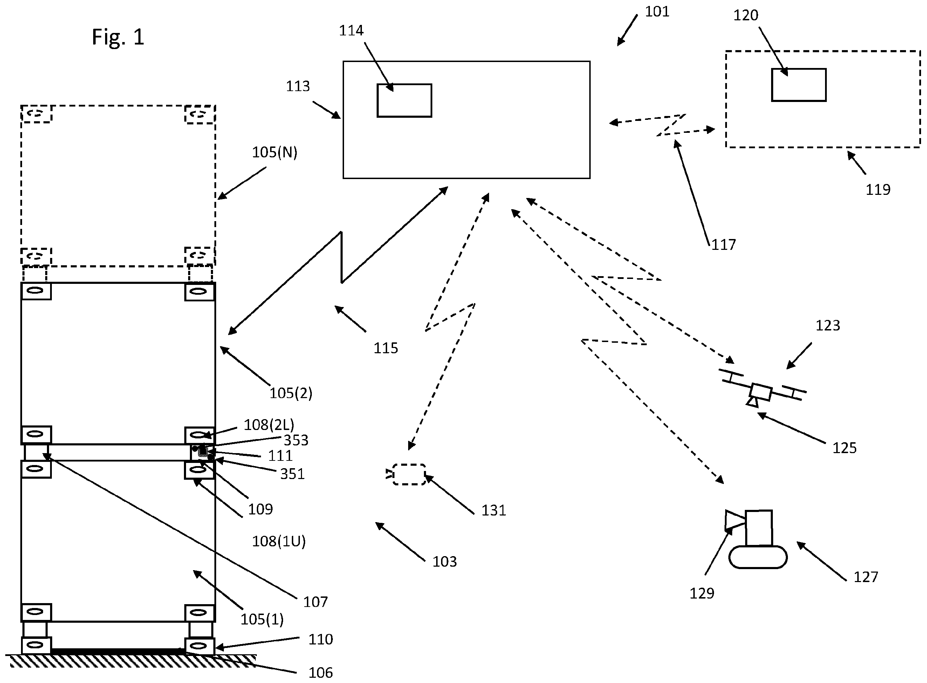

Figure 1 schematically illustrates a system 101 for detecting a hazardous condition in a container park 102 in a stack 103 of transport containers which is N containers high. Each container 105(1), 105(2), 105(N) in the stack is releasably joined to the container below (and, if the stack is attached to a vehicle, for example a ship, to a transport base 106 of the vehicle) by twistlocks 107 which connect an upper corner fitting 108(1U) of a first container 105(1) with the opposing lower corner fitting 108(2L) of a second container placed directly on top of the first container or which connect the lower corner fittings of the lowest container 105(1) to the fittings 110 in the transport base 106. At least one of said twistlocks is a detector twistlock unit 109 which comprises at least one sensor 111 for detecting a parameter which could be indicative of a hazardous condition and is able to communicate wirelessly via a wireless link 115 with a security control unit 113 which has a security unit wireless transceiver 114. Optionally, the detector twist lock may comprise one or more visual alarm devices 351 and/or one or more audible alarm devices 352 as described previously and below.

Preferably the security control unit 113 is able to communicate wirelessly via wireless link 117 with a main hazard management system 119 comprising a main hazard management system wireless transceiver 120, although it is also possible to have wired connections between the security control unit and the main hazard management system

Preferably the security control unit is able to communicate wirelessly via wireless link 121 with a optical viewing device for example, a flying drone 123 equipped with a camera 125, or a movable robot 127 equipped with a camera 129, or a camera 131 mounted by the container park.

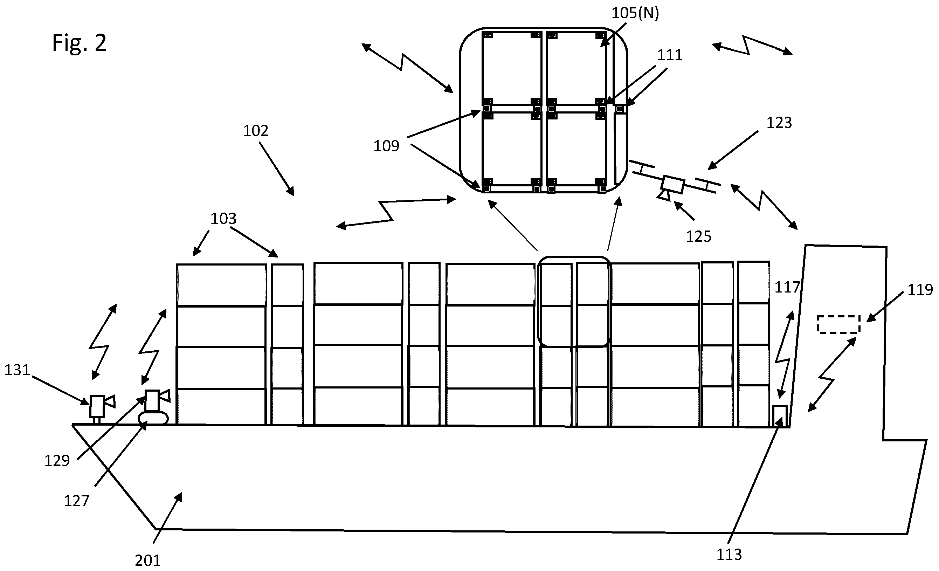

Figure 2 shows schematically a vessel 201 with a of a hazardous condition warning system in accordance with one embodiment of the invention. The vessel has a container park 102 containing at least one stack 103 of standardized containers 105 onboard. The containers may be according to ISO 1496-1:2013 and ISO 1161:1984 or any other container standard. As shown in the enlarged view of part of three neighbouring stacks, each container is attached to an underlying container (or a transport base (not shown) on a deck (not shown) of the ship) by twistlocks, adapted to comply with the standard used in the construction of the container, fitted into the corner fittings of the containers. Preferably each twistlock between containers in a stack, and between containers and a transport base, is a hazardous condition detector twistlock unit 109 (called "detector twistlock unit" for brevity in the following) which comprises at least one sensor 111. The system further comprises a security control unit (SCU) 113 and may, for purposes of observing the stacks in the container park, optionally further comprise one or more observation units such as a flying drone 123 equipped with a camera 125 and/or a movable robot 127 equipped with a camera 129 and/or a camera 131 mounted by the container park which can be used to visually inspect a container or stack to verify if a hazardous condition exists. All the units of the system are preferably wireless enabled so that they may communicate wirelessly with each other, although it is conceivable that some units, for example cameras and the vessel's own deck fitting twistlocks may be connected by wire to the security control unit (SCU) of the system. The wireless communication may be made over any suitable wireless interface, for example those comprising, or at least compatible with, radio access technologies such as e.g., ZigBee (standard IEEE 802.15.4), Z-wave, or any other Wireless Personal Area Networks (WPANs) such as Wi-Fi, Bluetooth etc. However, the wireless communication may be made over any other wireless communication such as e.g. 3GPP LTE, LTE-Advanced, E-UTRAN, UMTS, GSM, GSM/ EDGE, WCDMA, Time Division Multiple Access (TDMA) networks, Frequency Division Multiple Access (FDMA) networks, Orthogonal FDMA (OFDMA) networks, Single-Carrier FDMA (SC-FDMA) networks, Worldwide Interoperability for Microwave Access (WiMax), or Ultra Mobile Broadband (UMB), High Speed Packet Access (HSPA) Evolved Universal Terrestrial Radio Access (E-UTRA), Universal Terrestrial Radio Access (UTRA), GSM EDGE Radio Access Network (GERAN), 3GPP2 CDMA technologies, e.g., CDMA2000 1x RTT and High Rate Packet Data (HRPD), BLE, LoRaWAN, 6LoWPAN, NB-loT, CAT-M1, 5G mMTC, 802.11ah, Weightless-P, RFID or similar, via a wireless communication network.

The vessel has a conventional onboard main hazard management system 119 which is connected to the vessel's own hazard sensors such as fire detectors, smoke detectors, water level detectors, etc (not shown). This main hazard management system monitors the sensors and gives warning and alarm signals to the crew if a hazardous situation is detected by the vessel's hazard sensors. The security control unit of the present invention is, preferably wirelessly, connected to the main hazard management system and can send at least alarm messages and optionally can send warning messages to the main hazard management system. The main hazard management system can then act on the alarm message and any warning messages sent from the SCU.

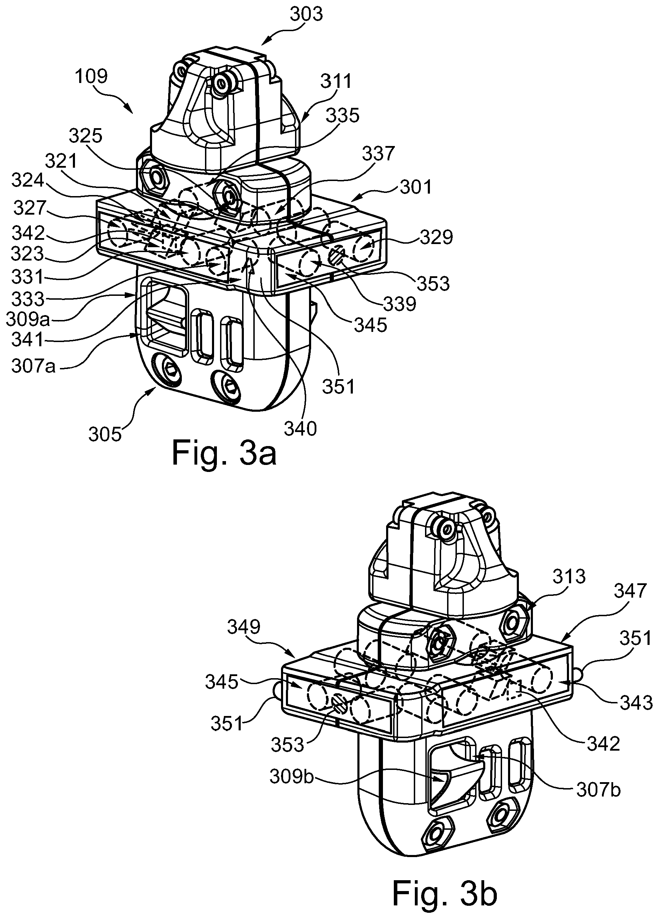

Figures 3a and 3b show an example of a first embodiment of a hazardous condition detector twistlock unit 109 according to the present invention in which only the features necessary for understanding the invention are described in detail. The hazardous condition detector twistlock unit comprises a body 301 which fits between the corner fittings of two stacked containers or between the corner fittings of a container unit and a transport base or the like. The body 301 is arranged between an upper portion 303 and a lower portion 305. The lower portion 305 has a shape which is adapted to closely fitting in a dedicated upper opening in a corner fitting of a container or transport base. Preferably the lower portion has two openings 307a and 307b through each of which a respective movable hook member 309a and 309b can be retracted into (as shown in figure 3a) and projected out of (as shown in figure 3b) in order to unlock and lock the bottom portion in the corner fitting of a container. Movement of the hook portions into and out of the locking position is preferably controlled by a motor-operated locking mechanism (not shown) contained inside the detector twistlock. This motor-operated locking mechanism may alternatively be replaced by an automatic or conventional manually operated locking mechanism. The upper portion 303 comprises a conventional twist fitting 311 which can be inserted into and through the lower opening in the underside of a bottom corner fitting of a container and locked into place by rotating the body of the detector twistlock through one quarter of a turn in the conventional manner. A guide body 313 which has a shape adapted to fit into the lower opening of a corner fitting may be rotatably mounted around the lower part of the twist fitting 311 in order to help the detector twistlock unit to be accurately positioned in the lower opening of the corner fitting. Any conventional means for locking the detector twistlock unit to containers can be substituted for that described above.

In order to be able to detect a potentially hazardous or hazardous situation a detector twistlock unit according to the invention contains a power supply, which could be for any suitable type, for example an energy storage unit such as a long-life battery, rechargeable battery 321 or capacitor or the like or combinations thereof, connectable to a wireless transceiver 323 and antenna 324, to a processing unit 325 and to at least one sensor 111. Preferably the power supply is connected to an energy harvesting device 322 such as a thermoelectric energy harvesting device, photovoltaic energy harvesting device, piezoelectric energy harvesting device, pyroelectric energy harvesting device, rf or wireless or electromagnetic energy harvesting device, wind energy harvesting device, vibration energy harvesting device which can replenish the energy in the power supply. The sensors can be of any suitable type which can detect a hazard, for example a heat sensor 327 for detecting temperatures indicative of a fire in a container to which it is attached or in the vicinity of the detector twistlock, a ionizing smoke detector 329 for detecting smoke indicative of a fire in the vicinity of a container connected with the detector twistlock, a pair of matched IR-transmitter 331 and IR-receiver 333 which detect changes in the amount of reflected radiation received by the IR-receiver and are indicative of smoke, an accelerometer 335, preferably 3-D, which can be used to determine the movement of the detector twistlock unit, an inclinometer 337 which detects the amount of lean of the detector twistlock unit, a camera 339 which can detect visible flames or smoke or other visible hazards, a load or weight detector 340 which can register changes in weight or a microphone or the like 342 which can detect noise. Sensors needing access to the environment outside the detector twistlock unit can be placed in the vicinity of the major faces 341, 343 of the body 301 which are parallel to the longest sides of the container and the minor faces 345, 347 of the body which are parallel to the shortest sides of the container during normal use. All the faces of the detector twistlock unit body 301 are normally visible during use (although one major face and one minor face are facing outwards while the other two faces are facing inwards) as the body 301 is the vertical gap between the containers, and the sensors may be arranged so that they can work irrespective of which major and minor faces face outwards when positioned on a container. However, if the sensors are arranged so that some sensors work more efficiently if facing outwards then the detector twistlock unit can be provided with means which identify which part of the body should face outwards, for example by providing an extension 349 of the body in the direction of minor face 345 and/or an extension (not shown) in the direction of a major face. Such an extension or markings on the detector twistlock unit can indicate to a user how the detector twistlock unit is intended to be orientated with respect to a container. Detector twistlock units which are positioned in different stacks, but which are at the same height and which are directly opposite each may cooperate to detect smoke by the IR-transmitter of one detector twistlock unit being positioned in the body so that in use it will be opposite the IR-receiver of the other detector twistlock unit. If the IR transmitters and receivers of both detector twistlock units are activated at the same time, then the output signal generated by an IP-receiver will drop if smoke comes between the IR-transmitter and the IR-receiver. Such a drop in the output signal strength could be indicative of smoke and could be used to generate a warning message if the drop in output signal strength is below a first threshold value or an alarm message if the drop in output signal strength is below a second threshold value. The detector twistlock units may also be provided with a visual alarm/warning system comprising, for example, one or more lights 351 and/or audible alarm/warning systems comprising at least one sound emitting device such as an alarm siren (353) or bell or buzzer or loudspeaker or the like to enable identification and localization of detector twistlock units without the use of any electronic devices. This provides additionally security in the event of a system failure, wireless communication failure or a power supply failure on the vessel

The processing unit 325 of each detector twistlock unit 109 comprises software and memory. The memory contains at least a non-erasable unique detector twistlock unit reference number which is the unique identity of the detector twistlock unit. Preferably the memory is arranged to store warning and alarm information such as when a warning or alarm message was transmitted, the sensors parameters detected at that time and any other information relevant to analysing what hazardous conditions existed and when they existed. The software comprises the code and instructions necessary to activate and deactivate sensors, control sleep and active (awake) modes of the detector twistlock unit, receive, process and transmit signals from the sensors to the security control unit and to receive, process and act on instructions received from the security control unit.

Preferably the software in each detector twistlock unit can perform the following steps:
lock and unlock any motor-operated hooks if present,
switch on and off the sensors and other functions of the detector twistlock unit at intervals which can be predetermined, random or ordered by the security control unit in order to minimise the power consumption of the unit and thereby conserve battery power.
receive signals from the sensors and compare the values signals against predetermined signal values for each detector stored in the memory of the detector twistlock unit, for example in a lookup table. The predetermined signal values could be values which represent an acceptable condition for a parameter, for example, a temperature within a normal operating range of -30 °C and + 50 °C, a warning condition, for example a temperature which is greater than 50 °C and less than 70 °C which could conceivably be caused temporarily by direct sunlight on the sensor but which also could be indicative of a fire at a distance from the detector twistlock unit, another warning condition when the temperature is less than -30 °C which could be the lower operating temperature of a locking/unlocking motor, and an alarm condition when the temperature is equal to or over 70 °C and is indicative of abnormally high temperatures such as a fire.
transmit messages to the security control unit upon request and/or when a warning condition and/or an alarm condition is detected by a sensor, the message including the unique detector twistlock unit reference number of the detector twistlock and /or the unique reference number of a container (preferably the upper container) which the detector twistlock unit is connected to. As the position of each container and its attached detector twistlock units are stored in an electronic container storage plan during loading of the vessel, providing the unique reference number of the detector twistlock unit and/or container(s) to which it is attached makes it possible for software to determine the position of the detector twistlock unit in the container park of containers. If applicable, activate audio and/or visual alarm/warning devices comprised in the detector twistlock unit. The determination of the position of the detector twistlock unit in the container park is preferably made in the security control unit but may be made and/or confirmed in the vessel's external main hazard management system or other external system, for example a shipping companies vessel monitoring system or visual inspection.

The security control unit contains a processor, a transceiver and is provided with the power supply necessary to operate the security control unit. The security control unit is adapted to communicate wirelessly with the detector twistlock units and preferably with any drone, robot or cameras connected to the system. The security control unit preferably communicates wirelessly with the external main hazard management system of the vessel but may have a wired connection to it either as a primary communication pathway or as a backup communication pathway in the case of failure of the wireless system.

The security control unit has access to software which may be stored in the memory of the security control unit or in a server or the like which the security control unit has access to, and comprises hardware and memory for performing the following functions:
send messages to, and receive messages from, detector twistlock units, main hazard management system, any drone, robot, or external camera and, optionally, external servers and databases,
store instructions, messages and have access to a loading plan identifying the position of each detector twistlock unit and, preferably, the container(s) attached to each detector twistlock unit, and optionally the associated container's load risk profile (i.e., information regarding the contents of a container and its risk of catching fire or sustaining combustion or exploding or leaking or otherwise presenting a potential hazard),
Preferably send instructions to detector twistlock units' battery power-saving software which actives ("wakes up") the sensors of each detector twistlock unit for short time periods and puts the sensors in sleep mode for other time periods. In normal sleep mode when the charge in the power supply is above a predetermined minimum threshold, the power-saving software in a detector twistlock unit can deactivate the sensors and other functions in a detector twistlock unit so that preferably the only functions happening in the detector twistlock unit are a first timer counting down to the next activation time when the sensors shall turn on and make a detection and a second timer which is counting down to the next time the detector twistlock unit should activate its transceiver to listen for wirelessly transmitted instructions from the security control unit. The period between activation times of the first timer in the detector twistlock unit may be user-configurable and, for example, adaptable to the number of detector twistlock units on the vessel with a first, relatively short sleep time (e.g., 29 minutes out of every 30 minutes) when there are a small number of detector twistlocks unit, for example less than 500 or less than 1000 detector twistlock units, and a relatively longer sleep time, for example 119 minutes out of every two hours, when there are more detector twistlock units. A second sleep mode may be activated when the power supply of the detector twistlock unit is intended to operate a locking motor and the charge in the power supply reaches or falls below the predetermined minimum threshold. This is to protect the detector twistlock unit from depleting its power supply and risking that the proper lock/unlock functionality is compromised when the container reaches its destination and is required to operate the unlocking feature of the detector twistlock unit. In this sleep mode, the detector twistlock unit will disable the timer for waking up and detecting and also notify the security control system that, from now on, the sensors on this detector twistlock unit are disabled and will not work in order to protect the battery and the lock/unlock function. After this, the detector twistlock unit will be in deep sleep until woken up for a lock/unlock operation. Optionally a message can be stored in the SCU or a server connected to the SCU which informs a user that the power supply of the detector twistlock unit needs to be replaced.

The period between activation times for the second timer may be user-configurable and may for example be that the second timer in the detector twistlock unit's processing unit counts down 1998 ms and then wakes the transceiver to listen for 2 ms, before restarting and counting down 1998 ms and listening again. Thus, in this example, each sleep period covers 2000 ms. When the system control unit wants to wake up one or more detector twistlock units, it sends a continuous broadcast message for at least 2000 ms (preferably for more than this, for example 2200 ms in order to leave a safety margin) to cover the whole time window of all detector twistlock units within range.

Preferably, the unique detector twistlock unit Identifier of each detector twistlock unit which is to be woken up is included in the 2000 ms broadcast message to ensure that only the detector twistlock units which the message is addressed to are woken up thereby saving detector twistlock unit power supply energy by limiting the number of detector twistlock units that wake up. When a detector twistlock unit receives a wake up message directed to it then the detector twistlock unit is subsequently able to perform other functions, for example active one or more onboard sensors or operate the locking and unlocking motor,
execute software containing a hazard condition determining algorithm wherein the algorithm has the following functions: receive messages from detector twistlock units, compare messages against hazardous condition criteria, check for false alarms, determine a hazardous condition is imminent and send a warning signal to the main hazard management system or determine that a hazardous condition is present and send an alarm signal to the main hazard management system.

The detection of false alarms can comprise the steps of receiving a warning message or an alarm message indicating a particular type of hazard (e.g., smoke, fire, heat, inclination, acceleration) from a first detector twistlock unit, determining the position of that first detector twistlock unit in a container park, determining the identity of neighbouring detector twistlock units in the container park, activating the neighbouring detector twistlock units and interrogating them to determine if any of them have a warning or alarm message for the same type of hazard as the first detector twistlock unit, determining that there is a false alarm if no neighbouring detector twistlock unit has a warning or alarm message for the same or similar type of hazard and disabling the detector on the first detector twistlock unit for a predetermined length of time, thereby preventing continuous transmission of a false alarm single from this unit. The predetermined length of time could be adapted to the type of false alarm , for example, if it was a heat related false alarm which possibly is caused by temporary heating of the sensor by sunlight focused on the sensor by a reflective surface, then the predetermined time could be 15 minutes which would give time for the reflected sunlight to lower in intensity and the sensor to cool down.

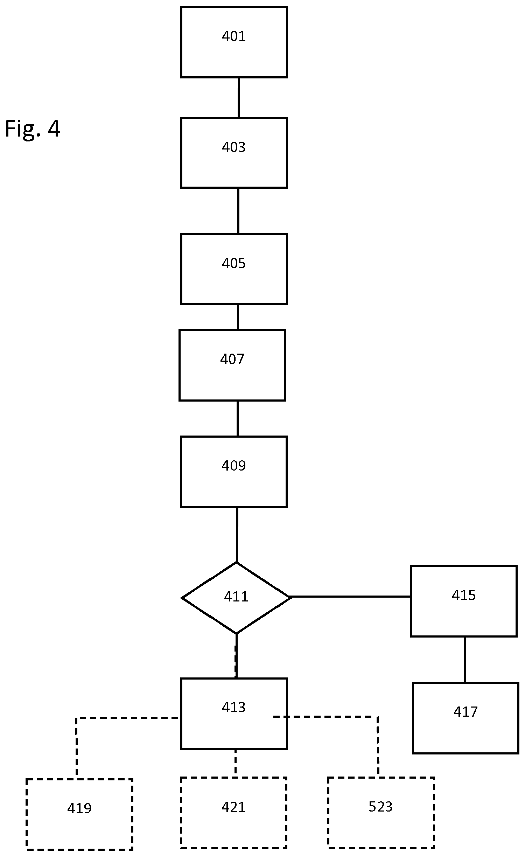

A method for the determination in a security control unit that a hazardous condition is imminent or that there is a potentially hazardous condition can comprise the steps shown in figure 4 of:
401 receiving a wireless warning message or an alarm message indicating a particular type of hazard (e.g., smoke, fire, heat, inclination, acceleration) from a first detector twistlock unit,
403 determining the position of the detector twistlock unit in a container park, for example, by finding its position in a stored map, such a container loading plan, or a table representative of the container park,
405 determining the identity of one or more neighbouring detector twistlock units in the container park,
407 wirelessly activating one of more neighbouring detector twistlocks unit,
409 wirelessly interrogating one or more active neighbouring detector twistlock units to determine if any of them have a warning or alarm message of for the same type of hazard as the first detector twistlock unit,
411 determining that there is a hazardous condition is imminent if at least one neighbouring detector twistlock unit has a warning message and determining that there is a false alarm if no neighbouring detector twistlock unit has a warning message,
413 when a hazardous condition is determined to be imminent, sending wirelessly and/or through a wired connection a warning signal to the main hazard management system, and optionally to further entities such as the ship owner, maritime authorities, etc.

If at step 411 it is determined that there is a false alarm, then the system can take the following steps:
415 deactivating the first detector twistlock unit or ignoring the warning message from the first detector twistlock unit for a period of time, and
417 reactivating the first detector twistlock unit after the period of time has elapsed.

Optionally the security control unit can have a user interface including an optical display unit upon which messages regarding warnings can be displayed, the method can comprise the steps of:
419 providing a warning message on the optical display.

Optionally the security control unit may control one of more cameras and the may optionally have the step of:
421 operating a camera to view said first detector twistlock unit and/or the stack containing said first detector twistlock unit and/or a container attached to said first container detector twistlock unit.

Optionally, the security control system may have access to a database containing the risk profile of some of or all of the containers and may be adapted to perform the step of:
423 extracting from a database the risk profile of each container with an alarm message, producing a danger intensity message based on said risk profile and transmitting said message to the main hazard management system and optionally to further entities such as the ship owner, maritime authorities, etc.

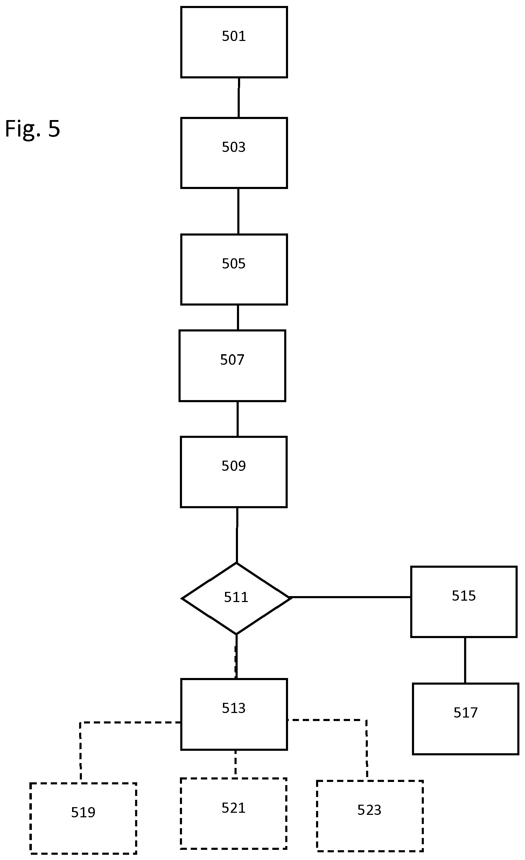

A method for the determination in a security control unit that a hazardous condition is actual can comprise the steps shown in figure 5 of:
501 wirelessly receiving an alarm message indicating a particular type of hazard (e.g., smoke, fire, heat, inclination, acceleration) from a first detector twistlock unit,
503 determining the position of the first detector twistlock unit in a container park, for example, by finding its position in a stored map, such a container loading plan, or a table representative of the container park,
505 determining the identity of one or more neighbouring detector twistlock units in the container park,
507 wirelessly activating one of more neighbouring detector twistlock units
509 wirelessly interrogating one or more active neighbouring detector twistlock units to determine if any of them have a warning or alarm message of for the same type of hazard as the first detector twistlock unit,
511 determining that a hazardous condition is actual if at least neighbouring detector twistlock unit has an alarm message and/or if a user-definable number of neighbouring detector twistlock units have a warning message and
513 when a hazardous condition is determined to be imminent, wirelessly and/or through a wired connection, sending an alarm signal to the main hazard management system and optionally to further entities such as the ship owner, maritime authorities, etc.

If at step 511 it is determined that there is a false alarm, then the system can take the following steps:
515 deactivating the first detector twistlock unit or ignoring the alarm message from the first detector twistlock unit for a period of time and
517 reactivating the first detector twistlock unit after the period of time has elapsed.

Optionally the security control unit can have a user interface including an optical display unit upon which messages regarding warnings can be displayed the method can comprise the step of
519 providing a warning message on the optical display.

Optionally the security control unit may control one of more cameras and the may optionally have the step of:
521 operating a camera to view said first detector twistlock unit and/or the stack containing said first detector twistlock and/or a container attached to said first container detector twistlock unit.

Optionally, the security control system may have access to a database containing the risk profile of each container and may adapted to perform the step of:
523 extracting from a database the risk profile of as many as possible containers attached to detector twistlock units with an alarm message, producing a danger intensity message based on said risk profile and transmitting said message to the main hazard management system and optionally to further entities such as the ship owner, maritime authorities, etc.

Optionally, parameter signals values may be transmitted from sensors which relate to the position of a detector twistlock unit such as GPS position sensors, accelerometers and inclinometers and these can be compared by an algorithm in the software of the SCU with threshold values for the detected parameter and/or signal values from other detector twistlock units on board the same vessel to determine if a warning signal or alarm signal needs to be generated. A warning signal would become necessary if the accelerations or inclinations of more than one detector twistlock unit surpassed a first threshold. An alarm signal would be generated if the accelerations or inclinations of more than one detector twistlock unit surpassed a second, higher threshold. These thresholds could be chosen to indicate that the motion of the vessel is becoming violent and risks exceeding the holding capacity of the detector twistlocks. For example, an acceleration of more than 0.5 G in any direction could warn of a potentially hazardous situation while an acceleration equal to or greater than 0.9 G would indicate a hazardous situation. Also, for example, an inclination of more than 25° to port or starboard could warn of a potentially hazardous situation while an inclination equal to or greater than 35° could indicate a hazardous situation. Warning and alarm signals could also be generated if the signals from neighbouring detector twistlock units vary by more than certain predetermined warning and alarm thresholds. For example, if the angle of inclination of a first detector twistlock unit in a high tier of a stack indicated an inclination which was more than the inclination of a detector twistlock unit at a lower tier in the same stack or a neighbouring stack, then this could mean that the container to which the first detector twistlock unit is connected to is loose and needs to be checked. A first threshold could be chosen to indicate that lashings or twistlocks have become loose and a second threshold could be chosen which could indicate that the lashing or a twistlock have failed thereby allowing one or more containers in a stack to move substantially more than its neighbouring containers or stack(s).

The software in the security control unit may be preprogrammed with preset or user-configurable warning and alarm thresholds and/or it may comprise machine learning software which monitors the detector twistlocks and, optionally, uses external information for other sources, for example, information on the vessels position, speed and heading, local weather conditions and forecasts and the motion of the stacks during previous heavy seas or strong winds, to dynamically adapt thresholds and/or wake times for detector twistlock units. For example, if the software is provided with information on the vessel's position and heading as well as the local weather conditions, it can calculate which detector twistlock units are exposed to sunlight and which may be heated to a temperature above a warning threshold purely due to their exposure to sunlight, and temporarily shut down those sensors or ignore messages from such sensors. If the contents of each container are stored in a risk profile which indicates the flammability of each container, then the software may decide to active the sensors of the detector twistlock units of containers holding a more dangerous load more often and/or to lower the threshold temperature that needs to be detected in the vicinity of such containers to generate alarms.

Optionally the security control unit may control the locking function of detector twistlock units with motor operated hook portions.

Optionally the security control unit and or the vessel's main hazard management system are connectable to radio and/or satellite communication and/or cellular gateways to alert higher order fire/smoke/other hazard alarm systems and/or alert the owners of the vessel of actual or potentially hazardous conditions.

Optionally the security control unit is able to operate a fixed camera to monitor the container park of containers and/or a movable camera on a drone and/or a camera on a robot which drone or robot can be manoeuvred to allow the camera to view the detector twistlock unit and/or containers that it is attached to and/or the stack in which said detector twistlock unit is included.

While the invention has been illustrated by sensors integrated into a detector twistlock unit, in a further embodiment of the present invention one or more sensors is removably attached to a twistlock thereby allowing upgrading of sensors when improved sensors are developed and/or replacing damaged sensors and/or adding sensors to an existing detector twistlock unit.

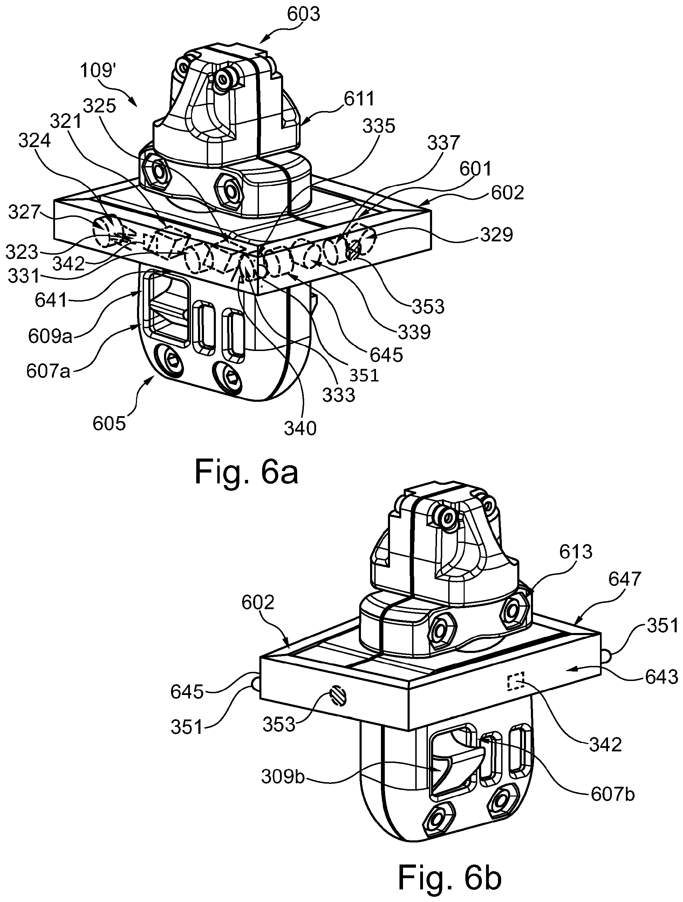

Figures 6a and 6b show an example of an embodiment of a detector twistlock unit 109' according to the present invention in which only the features necessary for understanding the invention are described in detail. This embodiment of the invention comprises an inventive sensor body 602 connectable to a separate twistlock of any suitable type to form a detector twistlock unit. In this illustrative example the detector twistlock unit comprises a twistlock body 601 which fits between the corner fittings of two stacked containers or between the corner fittings of a container unit and a transport base or the like. The twistlock body 601 is between an upper portion 603 and a lower portion 605 of the twistlock. The lower portion 605 has a shape which is adapted to closely fitting in a dedicated upper opening in a corner fitting of a container or transport base. Preferably the lower portion has two openings 607a and 607b through each of which a respective movable hook member 609a and 609b can be retracted into (as shown in figure 6a) and projected out of (as shown in figure 6b) in order to unlock and lock the bottom portion in the corner fitting of a container. Movement of the hook portions into and out of the locking position is preferably controlled by a motor-operated locking mechanism (not shown) contained inside the detector twistlock unit. This motor-operated locking mechanism may alternatively be replaced by an automatic or conventional manually operated locking mechanism. The upper portion 603 comprises a conventional twist fitting 611 which can be inserted into and through the lower opening in the underside of a bottom corner fitting of a container and locked into place by rotating the body of the detector twistlock unit through one quarter of a turn in the conventional manner. A guide body 613 which has a shape adapted to fit into the lower opening of a corner fitting may be rotatably mounted around the lower part of the twist fitting 611 in order to help the detector twistlock unit to be accurately positioned in the lower opening of the corner fitting. Any conventional means for locking the detector twistlock unit to containers can be substituted for that described above.

In order to be able to detect a potentially hazardous or hazardous situation a detector twistlock unit according to this embodiment of the invention comprises a U-shaped or, preferably, rectangular (as shown in figures 6a, 6b), preferably detachable, sensor body 602 which contains a power supply such as a battery 321 connectable to a wireless transceiver 323 and antenna 324, to a processing unit 325 and to at least one sensor. The sensor can be of any suitable type which can detect a hazard, for example a heat sensor 327 for detecting temperatures indicative of a fire in a container to which it is attached or in the vicinity of the detector twistlock unit, a ionizing smoke detector 329 for detecting smoke indicative of a fire in the vicinity of a container connected with the detector twistlock unit, a pair of matched IR-transmitter 331 and IR-receiver 333 which detect changes in the amount of reflected radiation received by the IR-receiver and are indicative of smoke, an accelerometer 335, preferably 3-D, which can be used to determine the movement of the detector twistlock unit, an inclinometer 337 which detects the amount of lean of the detector twistlock, a camera 339 which can detect visible flames or smoke or other visible hazards or a load or weight detector 340 which can register changes in weight or a microphone or the like 342 which can detect noise. During use the external faces of sensor body of the detector twistlock unit are visible. Sensors needing access to the environment outside the detector twistlock can be placed in the vicinity of the major external faces 641, 643 of the sensor body which are parallel to the longest sides of the container and the minor external faces 645, 647 of the sensor body 602 which are parallel to the shortest sides of the container during normal use. The height of the sensor body 602 is adapted to that of the twistlock body 601 so that during use it is equal to or less than the thickness of the twistlock body 601 so that it is not subjected to vertical compressive forces from the container above it.

The detector body provides the same functionality as the detector twistlock unit of the invention described previously and can be fitted to add detection capabilities to twistlocks to transform them into detector twistlock units suitable for use in a system in accordance with the present invention. A rectangular sensor body has a central opening adapted to the size of a twistlock so that the twist lock can be pressed vertically into the opening when the sensor body is horizontal. In the case of a U-shaped sensor body, the twistlock can be positioned into the open space between the arms of the U-shape.

## Claims

1. A detector twistlock unit (109, 109') for standardized containers for detecting one or more hazardous conditions for cooperation in a system for detecting a hazardous condition in a container park of containers on a ship or on land according to any of claims 11-14, wherein said detector twistlock unit is comprising:
a body (301; 601) with an upper portion (303; 603) configured to be insertable and lockable into a lower corner fitting (108(2L)) of a standardized container (105(2)) and a lower portion (305) configured to be insertable and lockable into an upper corner fitting (108(1U)) of a standardized container (105(1));
one or more sensors (111, 327-339, 340, 342) configured to detect a parameter relating to temperature and/or smoke and/or fire and/or the proximity to an external object and/or the position and/or acceleration of the detector twistlock unit and/or the inclination of the detector twistlock unit and/or the load on the detector twistlock unit and/or the noise in the vicinity of the detector twistlock unit;
a wireless transceiver (323) configured for wireless communication;
a processing unit (325) connected to said one or more sensors and to said transceiver, the processing unit being configured to:
store in memory and transmit a unique lock identifier which identifies said detector twistlock unit,
receive from said transceiver signals to activate and/or interrogate and/or deactivate said one or more sensors,
receive from said one or more sensors the status of the parameter detected by said one or more sensors, generate an output status signal of the detected status and output the output status signal to the transceiver;
a power supply (321) to power the wireless signal transceiver, the sensor(s) and the processing unit;
**characterised in that** the detector twist lock unit is adapted to detect a first parameter which has passed a first threshold which could indicate the potential presence of a hazardous condition and adapted to detect when the first parameter has passed a second threshold which represents a greater hazard than the first threshold and which could indicate the actual presence of a hazardous condition
and wherein the transceiver is further configured to receive from the processing unit the detected status and to transmit a wireless status message related to the detected status upon request and/or when a warning condition and/or an alarm condition is detected by a said sensor, wherein the wireless status message is a wireless warning message when the detected parameter has passed the first threshold and the status message is a wireless alarm message when the detected parameter has passed the second threshold.

2. A detector twistlock unit according to claim 1, **characterised in that** a said sensor is an accelerometer (335) and/or a GPS position receiver, and/or an inclinometer each configured to generate a position-related status signal and output a wireless signal related to said status signal to said processing unit.

3. A detector twistlock unit according to claim 1 or claim 2, **characterised by** each said sensor being configured to generate a detected parameter status message which can be sent to said processing unit and can be broadcast via said transceiver.

4. A detector twistlock unit according to any of the previous claims wherein the processing unit is configurable to wake up each said sensor for a first predetermined time interval and then deactivate each said sensor for a second predetermined time interval in order to minimise energy consumption.

5. A detector twistlock unit according to any of the previous claims wherein at least one said sensor is integrated into said detector twistlock unit.

6. A detector twistlock unit according to any of the previous claims wherein at least one said sensor is in a detector body (602) removably attached to the detector twistlock unit.

7. A detector twistlock unit according to any of the previous claims wherein at least one said sensor comprises a photoelectric sensor and a light source.

8. A detector twistlock unit according to any of the previous claims wherein it comprises an energy harvesting device (322) for replenishing the energy contained in the power supply.

9. A detector twistlock unit according to claim 8 **characterised in that** the energy harvesting device is a thermoelectric energy harvesting device or a photovoltaic energy harvesting device or a piezoelectric energy harvesting device or a pyroelectric energy harvesting device or a rf or wireless or electromagnetic energy harvesting device or a wind energy harvesting device or a vibration energy harvesting device.

10. A detector twistlock unit according to any of the previous claims **characterised in that** it comprises a visual alarm/warning system comprising, for example, one or more lights (351) and/or an audible alarm/warning system comprising a sound emitting device such as an alarm siren (353) or bell or buzzer or loudspeaker or the like.

11. System for detecting a hazardous condition in a container park of containers on a ship or on land comprising at least two containers (105(1), 105(2)) and a plurality of detector twistlock units (109, 109') according to any of claims 1-10 **characterised in that** it comprises:
a security control unit (113) comprising at least one wireless security control unit transceiver for communicating with said detector twistlock units and software for:
receiving a warning message or alarm message from said detector twistlock units,
identifying a detector twistlock unit transmitting a warning or alarm message,
determining the position of said detector twistlock unit transmitting a warning or alarm message in said container park,
sending a wake-up signal to one or more other detector twistlock units in said container park to activate their sensors so that they become one or more awake detector twist lock units,
requesting a status message from said one or more awake detector twistlock units in said container park,
receiving status messages from said one or more awake detector twistlock units in said container park, and
determining that a hazardous situation is imminent or present if one or more additional warning message or alarm message is received from said one or more awake detector twistlock units.

12. System according to claim 11 wherein said software further comprises means for:
transmitting a warning or alarm message when an alarm message is received from two or more detector twistlock units.

13. System according to claim 12 wherein said system comprises a drone with a camera and/or a robot with a camera and/or a fixed camera and said software is able to operate one or more of said cameras to view any detector twistlock unit which has transmitted a warning message or alarm message.

14. System according to claim 12 or 13 wherein said system comprises access to a database containing the risk profile of each container and is adapted to extract from said database a risk profile of each container associated with any detector twistlock unit alarm message, and is further adapted to produce a danger intensity message based on said risk profile and transmit said danger intensity message.

## Patentansprüche

1. Detektor-Twistlock-Einheit (109, 109') für standardisierte Container zum Detektieren von einer oder mehreren gefährlichen Bedingungen zur Kooperation in einem System zum Detektieren einer gefährlichen Bedingung in einem Containerpark von Containern auf einem Schiff oder an Land nach einem der Ansprüche 11-14, wobei die Detektor-Twistlock-Einheit Folgendes umfasst:
einen Körper (301; 601) mit einem oberen Abschnitt (303; 603), der dazu konfiguriert ist, in einen unteren Eckbeschlag (108(2L)) eines standardisierten Containers (105(2)) einführbar und darin verriegelbar zu sein, und einen unteren Abschnitt (305), der dazu konfiguriert ist, in einen oberen Eckbeschlag (108(1U)) eines standardisierten Containers (105(1)) einführbar und darin verriegelbar zu sein;
einen oder mehrere Sensoren (111, 327-339, 340, 342), die dazu konfiguriert sind, einen Parameter in Bezug auf Temperatur und/oder Rauch und/oder Feuer und/oder die Nähe zu einem externen Objekt und/oder die Position und/oder Beschleunigung der Detektor-Twistlock-Einheit und/oder die Neigung der Detektor-Twistlock-Einheit und/oder die Belastung an der Detektor-Twistlock-Einheit und/oder das Geräusch in der Nachbarschaft der Detektor-Twistlock-Einheit zu detektieren;
einen drahtlosen Sendeempfänger (323), der für drahtlose Kommunikation konfiguriert ist;
eine Verarbeitungseinheit (325), die mit dem einen oder den mehreren Sensoren und dem Sendeempfänger verbunden ist, wobei die Verarbeitungseinheit zu Folgendem konfiguriert ist:
Speichern in einem Speicher und Übertragen einer eindeutigen Verriegelungskennung, welche die Detektor-Twistlock-Einheit identifiziert,
Empfangen, von dem Sendeempfänger, von Signalen, um den einen oder die mehreren Sensoren zu aktivieren und/oder abzufragen und/oder zu deaktivieren,
Empfangen, von dem einen oder den mehreren Sensoren, des Status des Parameters, der durch den einen oder die mehreren Sensoren detektiert wird, Erzeugen eines Ausgabestatussignals des detektierten Status und Ausgeben des Ausgabestatussignals an den Sendeempfänger;
eine Stromversorgung (321), um den Sendeempfänger für das drahtlose Signal, den Sensor/die Sensoren und die Verarbeitungseinheit mit Strom zu versorgen;
**dadurch gekennzeichnet, dass** die Detektor-Twistlock-Einheit dazu angepasst ist, einen ersten Parameter, der einen ersten Schwellenwert überschritten hat, was das potentielle Vorhandensein einer gefährlichen Bedingung anzeigen kann, zu detektieren, und dazu angepasst ist, zu detektieren, wenn der erste Parameter einen zweiten Schwellenwert, der eine größere Gefahr als der erste Schwellenwert darstellt und der das tatsächliche Vorhandensein einer gefährlichen Bedingung anzeigen kann, überschritten hat
und wobei der Sendeempfänger ferner dazu konfiguriert ist, von der Verarbeitungseinheit den detektierten Status zu empfangen und eine drahtlose Statusnachricht in Bezug auf den detektierten Status auf Anfrage und/oder wenn eine Warnbedingung und/oder eine Alarmbedingung durch einen der Sensoren detektiert wird, zu übertragen, wobei die drahtlose Statusnachricht eine drahtlose Warnnachricht ist, wenn der detektierte Parameter den ersten Schwellenwert überschritten hat, und die Statusnachricht eine drahtlose Alarmnachricht ist, wenn der detektierte Parameter den zweiten Schwellenwert überschritten hat.

2. Detektor-Twistlock-Einheit nach Anspruch 1, **dadurch gekennzeichnet, dass** einer der Sensoren ein Beschleunigungsmesser (335) und/oder ein GPS-Positionsempfänger und/oder ein Neigungsmesser ist, wobei jeder dazu konfiguriert ist, ein positionsbezogenes Statussignal zu erzeugen und ein drahtloses Signal in Bezug auf das Statussignal an die Verarbeitungseinheit auszugeben.

3. Detektor-Twistlock-Einheit nach Anspruch 1 oder Anspruch 2, **dadurch gekennzeichnet, dass** jeder Sensor dazu konfiguriert ist, eine Statusnachricht für den detektierten Parameter zu erzeugen, die an die Verarbeitungseinheit gesendet werden kann und über den Sendeempfänger ausgestrahlt werden kann.

4. Detektor-Twistlock-Einheit nach einem der vorhergehenden Ansprüche, wobei die Verarbeitungseinheit dazu konfigurierbar ist, jeden Sensor für ein erstes vorbestimmtes Zeitintervall aufzuwecken und jeden Sensor dann für ein zweites vorbestimmtes Zeitintervall zu deaktivieren, um einen Energieverbrauch zu minimieren.

5. Detektor-Twistlock-Einheit nach einem der vorhergehenden Ansprüche, wobei mindestens einer der Sensoren in die Detektor-Twistlock-Einheit integriert ist.

6. Detektor-Twistlock-Einheit nach einem der vorhergehenden Ansprüche, wobei sich mindestens einer der Sensoren in einem Detektorkörper (602) befindet, der entfernbar an der Detektor-Twistlock-Einheit befestigt ist.

7. Detektor-Twistlock-Einheit nach einem der vorhergehenden Ansprüche, wobei mindestens einer der Sensoren einen photoelektrischen Sensor und eine Lichtquelle umfasst.

8. Detektor-Twistlock-Einheit nach einem der vorhergehenden Ansprüche, wobei sie eine Energiegewinnungsvorrichtung (322) zum Auffüllen der Energie, die in der Stromversorgung enthalten ist, umfasst.

9. Detektor-Twistlock-Einheit nach Anspruch 8, **dadurch gekennzeichnet, dass** die Energiegewinnungsvorrichtung eine thermoelektrische Energiegewinnungsvorrichtung oder eine photovoltaische Energiegewinnungsvorrichtung oder eine piezoelektrische Energiegewinnungsvorrichtung oder eine pyroelektrische Energiegewinnungsvorrichtung oder eine HF**-** oder drahtlose oder elektromagnetische Energiegewinnungsvorrichtung oder eine Windenergiegewinnungsvorrichtung oder eine Vibrationsenergiegewinnungsvorrichtung ist.

10. Detektor-Twistlock-Einheit nach einem der vorhergehenden Ansprüche, **dadurch gekennzeichnet, dass** sie ein visuelles Alarm-/Warnsystem, umfassend beispielsweise ein oder mehrere Lichter (351), und/oder ein hörbares Alarm-/Warnsystem, umfassend eine Lautemissionsvorrichtung, wie etwa eine Alarmsirene (353) oder eine Glocke oder einen Buzzer oder einen Lautsprecher oder ähnliches, umfasst.

11. System zum Detektieren einer gefährlichen Bedingung in einem Containerpark von Containern auf einem Schiff oder an Land, umfassend mindestens zwei Container (105(1), 105(2)) und eine Vielzahl von Detektor-Twistlock-Einheiten (109, 109') nach einem der Ansprüche 1-10, **dadurch gekennzeichnet, dass** es Folgendes umfasst:
eine Sicherheitssteuerungseinheit (113), die mindestens einen drahtlosen Sicherheitssteuerungseinheits-Sendeempfänger zum Kommunizieren mit der Detektor-Twistlock-Einheit und Software für Folgendes umfasst:
Empfangen einer Warnnachricht oder einer Alarmnachricht von der Detektor-Twistlock-Einheit,
Identifizieren einer Detektor-Twistlock-Einheit, die eine Warn- oder Alarmnachricht übermittelt,
Bestimmen der Position der Detektor-Twistlock-Einheit, die eine Warn- oder Alarmnachricht übermittelt, in dem Containerpark,
Senden eines Wecksignals an eine oder mehrere andere Detektor-Twistlock-Einheiten in dem Containerpark, um deren Sensoren zu aktivieren, sodass sie eine oder mehrere wache Detektor-Twistlock-Einheiten werden,
Anfordern einer Statusnachricht von einer oder mehreren wachen Detektor-Twistlock-Einheiten in dem Containerpark,
Empfangen von Statusnachrichten von der einen oder den mehreren wachen Detektor-Twistlock-Einheiten in dem Containerpark, und
Bestimmen, dass eine gefährliche Situation unmittelbar bevorsteht oder vorliegt, wenn eine oder mehrere zusätzliche Warnnachrichten oder Alarmnachrichten von der einen oder den mehreren wachen Detektor-Twistlock-Einheiten empfangen werden.

12. System nach Anspruch 11, wobei die Software ferner Mittel für Folgendes umfasst:
Übertragen einer Warn- oder Alarmnachricht, wenn eine Alarmnachricht von zwei oder mehreren Detektor-Twistlock-Einheiten empfangen wird.

13. System nach Anspruch 12, wobei das System eine Drohne mit einer Kamera und/oder einen Roboter mit einer Kamera und/oder eine feste Kamera umfasst und die Software in der Lage ist, eine oder mehrere der Kameras zu betreiben, um eine beliebige Detektor-Twistlock-Einheit, die eine Warnnachricht oder eine Alarmnachricht übertragen hat, zu betrachten.

14. System nach Anspruch 12 oder 13, wobei das System Zugriff auf eine Datenbank umfasst, die das Risikoprofil jedes Containers enthält, und dazu angepasst ist, aus der Datenbank ein Risikoprofil jedes Containers, der einer beliebigen Detektor-Twistlock-Einheit-Alarmnachricht zugeordnet ist, abzurufen, und ferner dazu angepasst ist, eine Gefährdungsintensitätsnachricht basierend auf dem Risikoprofil zu produzieren und diese Gefährdungsintensitätsnachricht zu übertragen.

## Revendications

1. Unité de verrou tournant à détecteur (109, 109') pour conteneurs normalisés, destinée à détecter une ou plusieurs conditions dangereuses pour coopérer dans un système de détection d'une condition dangereuse dans un parc de conteneurs sur un navire ou sur terre selon l'une quelconque des revendications 11 à 14, dans laquelle ladite unité de verrou tournant à détecteur comprend :
un corps (301 ; 601) avec une portion supérieure (303 ; 603) configurée pour être insérable et verrouillable dans un raccord d'angle inférieur (108(2L)) d'un conteneur normalisé (105(2)) et une portion inférieure (305) configurée pour être insérable et verrouillable dans un raccord d'angle supérieur (108(1U)) d'un conteneur normalisé (105(1)) ;
un ou plusieurs capteurs (111, 327-339, 340, 342) configurés pour détecter un paramètre lié à la température et/ou à la fumée et/ou à l'incendie et/ou à la proximité d'un objet externe et/ou à la position et/ou à l'accélération de l'unité de verrou tournant à détecteur et/ou à l'inclinaison de l'unité de verrou tournant à détecteur et/ou à la charge sur l'unité de verrou tournant à détecteur et/ou au bruit au voisinage de l'unité de verrou tournant à détecteur ;
un émetteur-récepteur sans fil (323) configuré pour une communication sans fil ;
une unité de traitement (325) connectée auxdits un ou plusieurs capteurs et audit émetteur-récepteur, l'unité de traitement étant configurée pour :
stocker en mémoire et transmettre un identifiant de verrou unique qui identifie ladite unité de verrou tournant à détecteur,
recevoir depuis ledit émetteur-récepteur des signaux pour activer et/ou interroger et/ou désactiver lesdits un ou plusieurs capteurs,
recevoir depuis lesdits un ou plusieurs capteurs l'état du paramètre détecté par lesdits un ou plusieurs capteurs, générer un signal d'état de sortie de l'état détecté et fournir en sortie le signal d'état de sortie vers l'émetteur-récepteur ;
une alimentation électrique (321) pour alimenter l'émetteur-récepteur de signaux sans fil, le ou les capteur(s) et l'unité de traitement ;
**caractérisée en ce que** l'unité de verrou tournant à détecteur est adaptée pour détecter un premier paramètre qui a dépassé un premier seuil, ce qui pourrait indiquer la présence potentielle d'une condition dangereuse, et adaptée pour détecter lorsque le premier paramètre a dépassé un deuxième seuil qui représente un risque supérieur au premier seuil et qui pourrait indiquer la présence réelle d'une condition dangereuse
et dans laquelle l'émetteur-récepteur est en outre configuré pour recevoir de l'unité de traitement l'état détecté et pour transmettre un message d'état sans fil lié à l'état détecté sur demande et/ou lorsqu'une condition d'avertissement et/ou une condition d'alarme est détectée par un dit capteur, dans laquelle le message d'état sans fil est un message d'avertissement sans fil lorsque le paramètre détecté a dépassé le premier seuil et le message d'état est un message d'alarme sans fil lorsque le paramètre détecté a dépassé le deuxième seuil.

2. Unité de verrou tournant à détecteur selon la revendication 1, **caractérisée en ce qu'**un dit capteur est un accéléromètre (335) et/ou un récepteur de position GPS, et/ou un inclinomètre, chacun étant configuré pour générer un signal d'état lié à la position et fournir en sortie un signal sans fil lié audit signal d'état à ladite unité de traitement.

3. Unité de verrou tournant à détecteur selon la revendication 1 ou la revendication 2, **caractérisée en ce que** chaque dit capteur est configuré pour générer un message d'état de paramètre détecté qui peut être envoyé à ladite unité de traitement et peut être diffusé par l'intermédiaire dudit émetteur-récepteur.

4. Unité de verrou tournant à détecteur selon l'une quelconque des revendications précédentes, dans laquelle l'unité de traitement est configurable pour réveiller chaque dit capteur pendant un premier intervalle de temps prédéterminé et ensuite désactiver chaque dit capteur pendant un deuxième intervalle de temps prédéterminé afin de réduire au minimum la consommation d'énergie.

5. Unité de verrou tournant à détecteur selon l'une quelconque des revendications précédentes, dans laquelle au moins un dit capteur est intégré dans ladite unité de verrou tournant à détecteur.

6. Unité de verrou tournant à détecteur selon l'une quelconque des revendications précédentes, dans laquelle au moins un dit capteur est dans un corps de détecteur (602) fixé de manière amovible à l'unité de verrou tournant à détecteur.

7. Unité de verrou tournant à détecteur selon l'une quelconque des revendications précédentes, dans laquelle au moins un dit capteur comprend un capteur photoélectrique et une source de lumière.

8. Unité de verrou tournant à détecteur selon l'une quelconque des revendications précédentes, dans laquelle elle comprend un dispositif de récupération d'énergie (322) pour réapprovisionner l'énergie contenue dans l'alimentation électrique.

9. Unité de verrou tournant à détecteur selon la revendication 8, **caractérisée en ce que** le dispositif de récupération d'énergie est un dispositif de récupération d'énergie thermoélectrique ou un dispositif de récupération d'énergie photovoltaïque ou un dispositif de récupération d'énergie piézoélectrique ou un dispositif de récupération d'énergie pyroélectrique ou un dispositif de récupération d'énergie rf ou sans fil ou électromagnétique ou un dispositif de récupération d'énergie éolienne ou un dispositif de récupération d'énergie vibratoire.

10. Unité de verrou tournant à détecteur selon l'une quelconque des revendications précédentes, **caractérisée en ce qu'**elle comprend un système d'alarme/avertissement visuel comprenant, par exemple, une ou plusieurs lumières (351) et/ou un système d'alarme/avertissement audible comprenant un dispositif d'émission sonore tel qu'une sirène d'alarme (353) ou une cloche ou un avertisseur sonore ou un haut-parleur ou analogue.

11. Système destiné à détecter une condition dangereuse dans un parc de conteneurs sur un navire ou sur terre comprenant au moins deux conteneurs (105(1), 105(2)) et une pluralité d'unité de verrou tournant à détecteur (109, 109') selon l'une quelconque des revendications 1 à 10, **caractérisé en ce qu'**il comprend :
une unité de contrôle de sécurité (113) comprenant au moins un émetteur-récepteur d'unité de contrôle de sécurité sans fil destiné à communiquer avec lesdites unité de verrou tournant à détecteur et un logiciel pour :
la réception d'un message d'avertissement ou d'alarme en provenance desdites unités de verrou tournant à détecteur,
l'identification d'une unité de verrou tournant à détecteur transmettant un message d'avertissement ou d'alarme,
la détermination de la position de ladite unité de verrou tournant à détecteur transmettant un message d'avertissement ou d'alarme dans ledit parc de conteneurs,
l'envoi d'un signal de réveil à une ou plusieurs autres unité de verrou tournant à détecteur dans ledit parc de conteneurs pour activer leurs capteurs afin qu'elles deviennent une ou plusieurs unité de verrou tournant à détecteur réveillées,
la demande d'un message d'état auxdites une ou plusieurs unités de verrou tournant à détecteur réveillées dans ledit parc de conteneurs,
la réception de messages d'état provenant desdites une ou plusieurs unités de verrou tournant à détecteur réveillées dans ledit parc de conteneurs, et
la détermination qu'une situation dangereuse est imminente ou présente si un ou plusieurs messages d'avertissement ou messages d'alarme supplémentaires sont reçus en provenance desdites une ou plusieurs unité de verrou tournant à détecteur réveillées.

12. Système selon la revendication 11, dans lequel ledit logiciel comprend en outre des moyens pour :
la transmission d'un message d'avertissement ou d'alarme lorsqu'un message d'alarme est reçu en provenance de deux ou plus unités de verrou tournant à détecteur.

13. Système selon la revendication 12, dans lequel ledit système comprend un drone avec une caméra et/ou un robot avec une caméra et/ou une caméra fixe et ledit logiciel est capable de mettre en fonctionnement une ou plusieurs desdites caméras pour visualiser toute unité de verrou tournant à détecteur qui a transmis un message d'avertissement ou un message d'alarme.

14. Système selon la revendication 12 ou 13, dans lequel ledit système comprend l'accès à une base de données contenant le profil de risque de chaque conteneur et est adapté pour extraire de ladite base de données un profil de risque de chaque conteneur associé à tout message d'alarme provenant d'une unité de verrou tournant à détecteur, et est en outre adapté à produire un message d'intensité de danger sur la base dudit profil de risque et à transmettre ledit message d'intensité de danger.
